# EUROPEAN PATENT SPECIFICATION

(11) **EP 3 924 890 B1**
(45) Date of publication and mention of the grant of the patent: **08.04.2026**
(21) Application number: 19705336.6
(22) Date of filing: 13.02.2019
(51) Int. Cl.: G06N 3/063, G06N 3/045, G06N 3/0495

(54) **LOAD DISTRIBUTION FOR A DISTRIBUTED NEURAL NETWORK**
LASTVERTEILUNG FÜR EIN VERTEILTES NEURONALES NETZWERK
RÉPARTITION DE CHARGE POUR UN RÉSEAU NEURONAL DISTRIBUÉ

(43) Date of publication of application: 22.12.2021
(73) Proprietor: TELEFONAKTIEBOLAGET LM ERICSSON (PUBL), 164 83 Stockholm (SE)
(72) Inventor: BASTANI, Saeed, 247 56 Dalby (SE); LI, Yun, 224 72 Lund (SE); BERKEMAN, Anders, 226 49 Lund (SE); HENNINGSSON, Maria, 224 72 Lund (SE); KALANTARI, Ashkan, 211 27 Malmö (SE)
(74) Representative: Ericsson
(86) International application number: PCT/EP2019/053536
(87) International publication number: WO 2020/164698

(56) References cited:
- AMIR ERFAN ESHRATIFAR ET AL: "JointDNN: An Efficient Training and Inference Engine for Intelligent Mobile Cloud Computing Services", ARXIV.ORG, CORNELL UNIVERSITY LIBRARY, 201 OLIN LIBRARY CORNELL UNIVERSITY ITHACA, NY 14853, 25 January 2018 (2018-01-25), XP081209960
- TEERAPITTAYANON SURAT ET AL: "Distributed Deep Neural Networks Over the Cloud, the Edge and End Devices", PROCEEDINGS OF THE INTERNATIONAL CONFERENCE ON DISTRIBUTED COMPUTING SYSTEMS, IEEE COMPUTER SOCIETY, US, 5 June 2017 (2017-06-05), pages 328 - 339, XP033122945, ISSN: 1063-6927, [retrieved on 20170713], DOI: 10.1109/ICDCS.2017.226
- YIPING KANG ET AL: "Neurosurgeon", ARCHITECTURAL SUPPORT FOR PROGRAMMING LANGUAGES AND OPERATING SYSTEMS, ACM, 2 PENN PLAZA, SUITE 701 NEW YORK NY 10121-0701 USA, 4 April 2017 (2017-04-04), pages 615 - 629, XP058326939, ISBN: 978-1-4503-4465-4, DOI: 10.1145/3037697.3037698

## Description

### TECHNICAL FIELD

The present disclosure relates generally to the field of neural networks. More particularly, it relates to dynamic load distribution for a distributed neural network.

### BACKGROUND

A neural network is a network with a certain level of complexity represented as a set of layers wherein the layers are categorized as input, hidden and output. Every neural network has an input layer comprising a collection of input units, at least one hidden layer, and an output layer comprising a collection of output units.

A layer comprises a set of computational (physical or virtual) units which receives layer input, processes the layer input, and produces layer output. The layer output of the output layer is usually used for predictions, e.g. classification.

Neural networks use sophisticated mathematical modelling to process data in complex ways e.g. through pattern recognition.

Neural networks, e.g. Deep Neural Networks (DNN), has emerged as a promising Artificial Intelligence (Al) technique for solving complex real-life problems including image classification, object detection, and speech recognition, to mention a few.

However, neural networks demand large amounts of computations, both for training and inferencing.

A drawback of neural networks is therefore that a significant energy usage for computations is required in devices of the neural networks.

In distributed neural networks, processing is distributed between a device and a cloud service. Usually, the distribution is such that the lower layers of the neural network are processed in the device and the remaining layers are offloaded to the cloud service.

A first drawback of this approach to distributed neural networks is that the lower layers only detect low level features, which, in general, is not abstract enough to be regarded as a final output. A second drawback is that specific exit layers on top of the neural networks should be designed and trained for this approach to work. A third drawback is that this approach has only been applied to classification task, and it is not suitable to be applied to more complicated tasks such as object detection.

Therefore, there is a need for alternative approaches for load distribution for a distributed neural network.

AMIR ERFAN ESHRATIFAR ET AL in "JointDNN: An Efficient Training and Inference Engine for Intelligent Mobile Cloud Computing Services", ARXIV.ORG, CORNELL UNIVERSITY LIBRARY, 201 OLIN LIBRARY CORNELL UNIVERSITY ITHACA, NY 14853, 25 January 2018 (2018-01-25), describes collaborative computation between a mobile device and cloud for DNNs in both inference and training phase.

TEERAPITTAYANON SURAT ET AL in "Distributed Deep Neural Networks Over the Cloud, the Edge and End Devices",PROCEEDINGS OF THE INTERNATIONAL CONFERENCE ON DISTRIBUTED COMPUTING SYSTEMS, IEEE COMPUTER SOCIETY, US, 5 June 2017 (2017-06-05), pages 328-339, ISSN: 1063-6927, DOI: 10.1109/ICDCS.2017.226, describes distributed deep neural networks (DDNNs) over distributed computing hierarchies, consisting of the cloud, the edge (fog) and end devices with early exit points for exiting locally when the system is confident and offloading to the edge and the cloud when additional processing is required.

YIPING KANG ET AL in "Neurosurgeon",ARCHITECTURAL SUPPORT FOR PROGRAMMING LANGUAGES AND OPERATING SYSTEMS, ACM, 2 PENN PLAZA, SUITE 701 NEW YORK NY 10121-0701 USA, 4 April 2017 (2017-04-04), pages 615-629, DOI: 10.1145/3037697.3037698, ISBN: 978-1-4503-4465-4, describe computation partitioning strategies that leverage both the cycles in the cloud and on the mobile device to achieve low latency, low energy consumption, and high datacenter throughput.

### SUMMARY

The invention is defined in the appended independent claims. Emobidments of the invention are defined in the appended dependent claims.

An advantage of some embodiments is that alternative approaches for dynamic load distribution for a distributed neural network are provided.

Another advantage of some embodiments is that flexible software based and hence hardware agnostic approaches may be provided.

Yet an advantage of some embodiments is that dynamic and power saving approaches may be provided.

Yet another advantage of some embodiments is that a higher accuracy in layer output at the device may be realized.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a flowchart illustrating example method steps according to some embodiments,
Figure 3 is a flowchart illustrating example method steps according to some embodiments;
Figure 4 is a schematic block diagram illustrating an example arrangement according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, neural networks demand large amounts of computations, both for training and inferencing. This demand is more pronounced when neural networks are implemented in resource-constrained devices such as sensors, smart watches, smart phones, etc.

The challenge of large amount of computations in the training part has been substantially mitigated because of the prevalence of high performance cloud technology and leveraging the offline nature of neural network training. Because of the prevalence of edge cloud technology, new methods are herein introduced for offloading the inferencing part from the device to the edge cloud.

Edge cloud is any computing device connected by wire or wirelessly connected e.g. via WiFi or cellular transmission to a resource-constrained device (e.g. a sensing device) and has less stringent constrains on energy usage.

As mentioned above, the distribution of processing in distributed neural networks is usually such that the lower layers of the neural network are processed in the device and the remaining layers are offloaded to the cloud service. This distribution is static, i.e., the offloading takes place at a fixed designated layer regardless of other device specific parameters.

A first drawback of this static approach to distributed neural networks is that the lower layers only detect details, which, in general, is not abstract enough to be regarded as a final output. A second drawback is that specific exit layers on top of the neural networks should be designed and trained for this approach to work. A third drawback is that this approach has only been applied to classification task, and it is not suitable to be applied to more complicated tasks such as object detection.

In the following, embodiments where alternative approaches for dynamic load distribution for a distributed neural network are described.

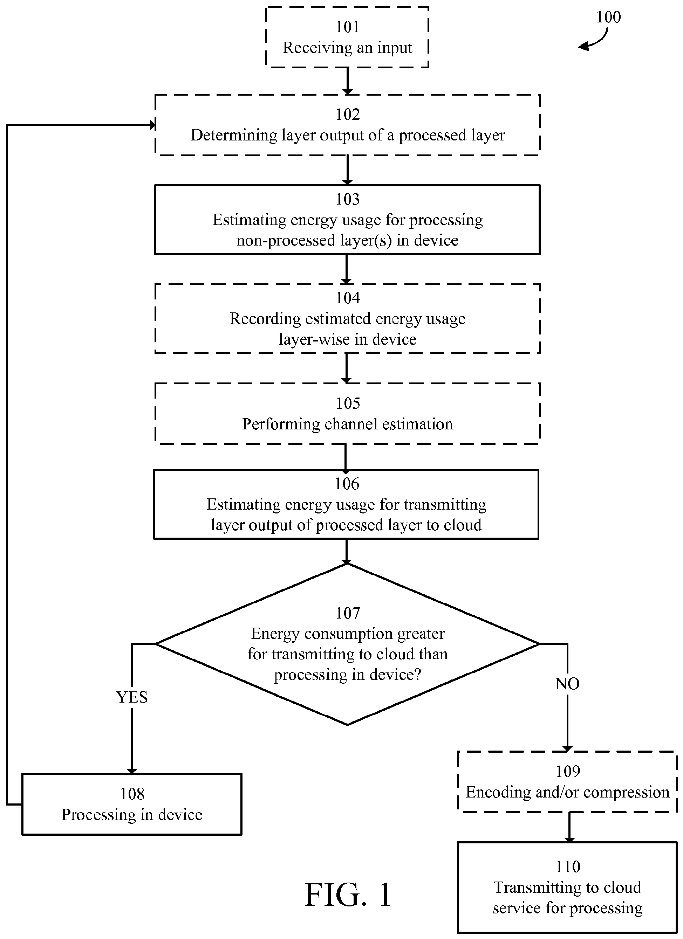

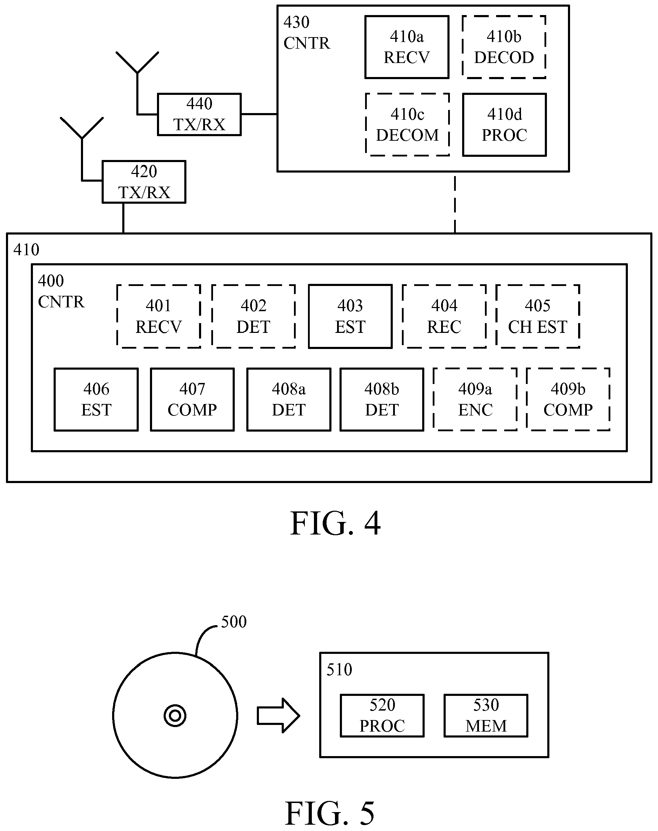

Figure 1 is a flowchart illustrating method steps of an example load distribution method 100 according to some embodiments. The load distribution method 100 is for dynamic load distribution for a distributed neural network. Thus, the load distribution method 100 may, for example, be performed by the load distribution arrangement 400 of Figure 4 and/or the computer program product 500 of Figure 5.

The load distribution method 100 comprises following steps.

In step 101, an input is received in the device of the neural network wherein the input comprises any one of image data, voice data, video data, and temperature data.

The input may further comprise any other type of input suitable to be received by resource-constrained devices such as sensors, smart watches, smart phones etc.

In step 102, at least one layer output of the at least one processed layer is determined for processing the subsequent layers.

A layer output may comprise feature maps, activation maps, or activations in a layer. Hereinafter only the term layer output will be used for consistency.

In step 103, an energy usage for processing at least one non-processed layer in a device of the neural network is estimated in the device.

The estimating step 103 is performed because the amount of computations and memory accesses needed to run a neural network may be very large which in turn may lead to fast battery discharge and device overheat. Also, the limited amount of Central Processing Unit (CPU) floating point operations per second (FLOPs) and memory bandwidth in resource-constrained device give rise to experienced latency. Hence, device specific parameters need to be taken into account.

The estimating in step 103 may also comprise measurements and/or arithmetic calculations.

In step 104, the estimated energy usage for processing the at least one non-processed layer is recorded layer-wise in the device of the neural network in response to estimating, in the device of the neural network, the energy usage for processing the at least one non-processed layer in the device.

In step 105, channel estimation is performed to estimate the energy usage for transmitting the layer output of the at least one processed layer to the cloud service of the neural network for processing the subsequent layers.

The channel estimation comprises estimation of the effective channel bitrate and latency.

The channel estimation technique is by default running in the radio interface of the resource-constrained device to determine the effective bit rate and transmission latency. This information is used to estimate the required energy usage to transmit the layer output of the at least one processed layer over the wireless channel e.g. via WiFi or cellular transmission.

In step 106, an energy usage for transmitting layer output of at least one processed layer to a cloud service of the neural network for processing is estimated in the device.

The estimating step 106 is performed because transmitting the layer output to the cloud service may increase the inference latency and/or energy usage for communication. Hence, transmission specific parameters need to be taken into account.

The estimating in step 106 may also comprise measurements and/or arithmetic calculations.

The layer output of the at least one processed layer is the layer input for subsequent layer(s).

In step 107, the estimated energy usage for processing the at least one non-processed layer in the device is compared with the estimated energy usage for transmitting the layer output of the at least one processed layer to the cloud service.

The decision to process the at least one non-processed layer in the device or to transmit the layer output of the at least one processed layer to the cloud service i.e. the offloading decision, is done at runtime by the device in the comparing step 107.

The comparing step 107 is performed layer-wise except for the final layer i.e. the output layer.

More specifically, the device compares two metrics at each specific layer:
1) the energy usage to continue the inference processing from that specific layer onward on the device, and
2) the energy usage to transmit the layer output of the at least one processed layer to the cloud service.

Using these two metrics and considering the available energy budget, the device offloads the layer output of the at least one processed layer when the estimated energy usage for transmitting the layer output of the at least one processed layer to the cloud service is less than the estimated energy usage for processing the at least one non-processed layer in the device otherwise the at least one non-processed layer is processed in the device.

In step 108, the at least one non-processed layer is processed in the device when it is determined that the estimated energy usage for transmitting the layer output of the at least one processed layer to the cloud service is equal or greater than the estimated energy usage for processing the at least one non-processed layer.

In step 109, the layer output of the at least one processed layer is encoded and/or compressed when it is determined to transmit the layer output of the at least one processed layer to the cloud service of the neural network for processing the subsequent layers.

Once it is determined to transmit the layer output of the at least one processed layer to the cloud service of the neural network, a compression technique may be applied on the layer output of the processed layer to achieve even more power saving. Therefore, in contrast to the static approach to load distribution, the resource-constrained device may decide to offload from any layer depending on the energy usage so that the power consumption in the device is as low as possible.

As an example of encoding and/or compression, a lightweight sparse encoding/compression may be applied.

In step 110, the layer output of the at least one processed layer is transmitted to the cloud service for processing subsequent layers when it is determined that the estimated energy usage for transmitting the layer output of the at least one processed layer to the cloud service is less than the estimated energy usage for processing the at least one non-processed layer in the device.

Hence, once it is determined to transmit the layer output of the at least one processed layer to the cloud service all the subsequent layers may be processed in the cloud service.

In some embodiments, the energy usage comprises energy used for any one of multiply-accumulate operations, memory accesses, non-linear activation functions, normalization, padding, and pooling.

In some embodiments, the processing comprises inference processing.

Inference processing may comprise applying a trained data model on new data in order to classify data in e.g. pattern recognition.

In some embodiments, the device of the neural network is a resource constrained device.

Examples of resources constrained devices may e.g. be battery-powered devices such as wearables e.g. smart phones, smart watches, smart glasses etc.

In some embodiments, the resource constrained device comprises a sensor.

Examples of resource constrained devices comprising sensors may e.g. be other battery powered Internet of Things (IoT) devices such as cameras, microphones, accelerometers, wristband etc.

In some embodiments, the cloud service of the neural network comprises an edge cloud service.

An edge cloud may be any computing device or collection of computing devices connected by wire or wirelessly to a resource-constrained device (e.g. a sensing device) and has less stringent constrains on energy usage, and can offer resources, e.g. for computation and storage, to resource-constrained devices. A smartphone, for instance, can act as an edge cloud of a smart watch or smart glasses.

An advantage of some embodiments is that alternative approaches for dynamic load distribution for a distributed neural network are provided.

Another advantage of some embodiments is that flexible software based and hence hardware agnostic approaches may be provided.

Yet an advantage of some embodiments is that dynamic and power saving approaches may be provided.

Yet another advantage of some embodiments is that a higher accuracy in layer output at the device may be realized because the edge cloud can, for example, perform its computations in full precision floating point.

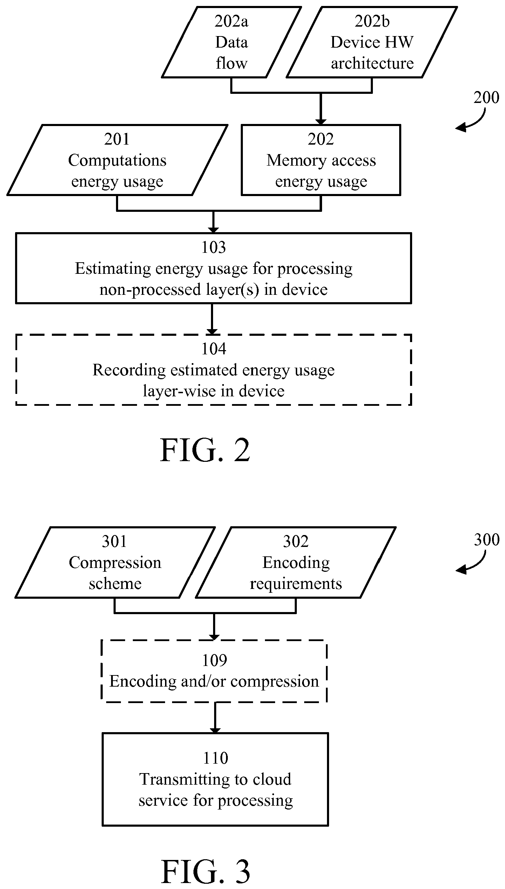

Figure 2 is a flowchart illustrating method steps of an example load distribution method 200 according to some embodiments. The load distribution method 200 may, for example, be used in connection with the execution of the load distribution method 100. The load distribution method 200 is for dynamic load distribution for a distributed neural network. Thus, the load distribution method 200 may, for example, be performed by the load distribution arrangement 400 of Figure 4 and/or the computer program product 500 of Figure 5.

The load distribution method 200 comprises following steps.

In step 103, corresponding to step 103 of the load distribution method 100 illustrated in Figure 1, an energy usage for processing at least one non-processed layer in a device of the neural network is estimated in the device.

The energy usage to process the neural network from each layer onward is estimated and given to the device. The energy usage may comprise the energy used for computations 201 e.g. multiply-accumulate operations, non-linear activation functions, normalization, padding, and pooling and the energy used for memory access 202 i.e. read/write.

Firstly, since the neural network structure and the input size are known, the computations 201 is a fixed number.

Secondly, since the data flow algorithm 202a and the device hardware architecture 202b are known, the memory access energy usage 202 can be calculated beforehand. Therefore, the energy usage for processing non-processed layers in the device comprises an addition of energy usage for computations 201 and memory access 202 which can be given to the device as a fixed number. This is referred to as inference energy.

In step 104, corresponding to step 104 of the load distribution method 100 illustrated in Figure 1, the estimated energy usage for processing the at least one non-processed layer is recorded layer-wise in the device of the neural network in response to estimating, in the device of the neural network, the energy usage for processing the at least one non-processed layer in the device.

Figure 3 is a flowchart illustrating method steps of an example load distribution method 300 according to some embodiments. The load distribution method 300 may, for example, be used in connection with the execution of the load distribution method 100. The load distribution method 300 is for dynamic load distribution for a distributed neural network. Thus, the load distribution method 300 may, for example, be performed by the load distribution arrangement 400 of Figure 4 and/or the computer program product 500 of Figure 5.

The load distribution method 300 comprises following steps.

In step 109, corresponding to step 109 of the load distribution method 100 illustrated in Figure 1, the layer output of the at least one processed layer is encoded and/or compressed when it is determined to transmit the layer output of the at least one processed layer to the cloud service of the neural network for processing the subsequent layers.

Encoding and/or compression techniques are used to reduce the size of the layer output wherein parameters such as compression scheme 301 and encoding requirements 302 are taken into consideration. More specifically, sparse coding is a technique of this kind, which eliminates zero-valued feature entries and hence reduces the amount of transmitted data. The encoding and/or compression technique to be used for this purpose should have a lightweight computational complexity and, hence, the incurred latency and energy usage should be negligible.

Once the encoding and/or compression has been applied, the compressed layer output of the at least one processed layer is sent to the edge cloud. In order to further speed-up the communication (i.e. latency reduction), a loss tolerance scheme may be applied which helps reduce the number of retransmissions.

In step 110, corresponding to step 110 of the load distribution method 100 illustrated in Figure 1, the layer output of the at least one processed layer is transmitted to the cloud service for processing subsequent layers when it is determined that the estimated energy usage for transmitting the layer output of the at least one processed layer to the cloud service is less than the estimated energy usage for processing the at least one non-processed layer in the device.

Hence, in making dynamic trade-offs between computations and communication aspects of inference processing, as described herein, the outcome of such a dynamic trade-off is a robust distributed AI system.

Moreover, the embodiments described herein are not bound to a particular neural network architecture.

Figure 4 is a schematic block diagram illustrating an example arrangement according to some embodiments. The example arrangement is a load distribution arrangement 410 for dynamic load distribution for a distributed neural network, wherein the arrangement is configured to be associated with (e.g. operatively connectable, or connected by wire or wirelessly connected to) cloud service controlling circuitry (CNTR) 430, e.g. cloud assembly circuitry, configured to receive layer output of at least one processed layer of the neural network from a device of the neural network, process subsequent layers of the neural network in response to receiving the layer output of the at least one processed layer from the device of the neural network, and transmit layer output of the processed subsequent layers to the device of the neural network.

The load distribution arrangement 410 comprises device controlling circuitry (CNTR) 400, which may in turn comprise an estimating arrangement (EST) 403, e.g. estimating circuitry, configured to estimate, in a device of the neural network, an energy usage for processing at least one non-processed layer in the device. The CNTR 400 may further comprise an estimating arrangement (EST) 406 configured to estimate, in the device of the neural network, an energy usage for transmitting layer output of at least one processed layer to a cloud service of the neural network for processing.

The CNTR 400 may further comprise a comparing arrangement (COMP) 407, e.g. comparing circuitry, configured to compare, in the device of the neural network, the estimated energy usage for processing the at least one non-processed layer in the device with the estimated energy usage for transmitting the layer output of the at least one processed layer to the cloud service.

The CNTR 400 may further comprise a determining arrangement (DET) 408a, e.g. determining circuitry, configured to determine to process the at least one non-processed layer in the device when the estimated energy usage for transmitting the layer output of the at least one processed layer to the cloud service is equal or greater than the estimated energy usage for processing the at least one non-processed layer in the device, and a determining arrangement (DET) 408b, e.g. determining circuitry, configured to determine to transmit the layer output of the at least one processed layer to the cloud service for processing subsequent layers when the estimated energy usage for transmitting the layer output of the at least one processed layer to the cloud service is less than the estimated energy usage for processing the at least one non-processed layer in the device.

Transmission arrangements (not shown), e.g. transmission circuitry, configured to transmit and receive layer output may be comprised in the transceivers 420,440.

In some embodiments, the load distribution arrangement 410 further comprises a determining arrangement (DET) 402, e.g. determining circuitry, configured to determine, in the device of the neural network, at least one layer output of the at least one processed layer for processing the subsequent layers.

In some embodiments, DET 402 is further configured to determine, in the device of the neural network, multiple layer outputs of multiple processed layers for processing the subsequent layers.

In some embodiments, the load distribution arrangement 410 further comprises a receiving arrangement (RECV) 401, e.g. receiving circuitry, configured to receive an input, at the device of the neural network, preceding the determination of the layer output of the at least one processed layer for processing wherein the input comprises any one of image data, voice data, video data, and temperature data.

In some embodiments, the load distribution arrangement 410 further comprises a channel estimation arrangement (CH EST) 405, e.g. channel estimating circuitry, configured to estimate the energy usage for transmitting the layer output of the at least one processed layer to the cloud service of the neural network for processing the subsequent layers.

In some embodiments, the load distribution arrangement 410 further comprises an encoding arrangement (ENC) 409a, e.g. encoding circuitry, configured to encode and/or a compression arrangement (COMP) 409b, e.g. compressing circuitry, configured to compress the layer output of the at least one processed layer when it is determined to transmit the layer output of the at least one processed layer to the cloud service of the neural network for processing the subsequent layers.

In some embodiments, the load distribution arrangement 410 further comprises a recording arrangement (REC) 404, e.g. recording circuitry, configured to record the estimated energy usage for processing the at least one non-processed layer layer-wise in the device of the neural network in response to estimating, in the device of the neural network, the energy usage for processing the at least one non-processed layer in the device.

The load distribution arrangement 430 comprises cloud service controlling circuitry (CNTR) 430, which may in turn comprise a receiving arrangement (RECV) 410a, e.g. receiving circuitry, configured to receive layer output of at least one processed layer of the neural network from a device of the neural network and a processing arrangement (PROC) 410d, e.g. processing circuitry, configured to process subsequent layers of the neural network in response to receiving the layer output of the at least one processed layer from the device of the neural network.

Transmission arrangements (not shown), e.g. transmission circuitry, configured to transmit and receive layer output may be comprised in the transceivers 420,440.

In some embodiments, the load distribution arrangement 430 further comprises a decoding arrangement (DECOD) 410b, e.g. decoding circuitry, configured to decode the layer output of the at least one processed layer when receiving the layer output of the at least one processed layer at the cloud service of the neural network for processing the subsequent layers.

In some embodiments, the load distribution arrangement 430 further comprises a decompressing arrangement (DECOM) 410c, e.g. decompressing circuitry, configured to decompress the layer output of the at least one processed layer when receiving the layer output of the at least one processed layer at the cloud service of the neural network for processing the subsequent layers.

The load distribution arrangements 410,430 may be comprised in a resource-constrained device and an edge cloud and/or the load distribution arrangements 410,430 may be configured to perform method steps of any of the methods described in connection with Figure 1, 2, 3 or otherwise described herein.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figure 1, 2, 3 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for dynamic load distribution for a distributed neural network wherein processing by the distributed neural network comprises processing a plurality of layers, comprising the steps of:
estimating (103), by a device of the neural network, an energy usage for processing at least one non-processed layer in the device,
estimating (106), by the device of the neural network, an energy usage for transmitting layer output of at least one processed layer to a cloud service of the neural network for processing,
comparing (107), by the device of the neural network, the estimated energy usage for processing the at least one non-processed layer in the device with the estimated energy usage for transmitting the layer output of the at least one processed layer to the cloud service,
determining (108) to process the at least one non-processed layer in the device when the estimated energy usage for transmitting the layer output of the at least one processed layer to the cloud service is equal or greater than the estimated energy usage for processing the at least one non-processed layer, and
determining (110) to transmit the layer output of the at least one processed layer to the cloud service for processing subsequent layers when the estimated energy usage for transmitting the layer output of the at least one processed layer to the cloud service is less than the estimated energy usage for processing the at least one non-processed layer in the device.

2. The method according to claim 1, further comprising the step of:
determining (102), by the device of the neural network, at least one layer output of the at least one processed layer for processing the subsequent layers.

3. The method according to claim 2, wherein the determining (102), by the device of the neural network, further comprises determining multiple layer outputs of multiple processed layers for processing the subsequent layers.

4. The method according to any of claims 2-3, wherein the determining (102), by the device of the neural network, the at least one layer output of the at least one processed layer for processing the subsequent layers is preceded by the step of:
receiving (101) an input, in the device of the neural network, wherein the input comprises any one of image data, voice data, video data, and temperature data.

5. The method according to any of claims 1-4, further comprising the step of:
performing (105) channel estimation to estimate the energy usage for transmitting the layer output of the at least one processed layer to the cloud service of the neural network for processing the subsequent layers.

6. The method according to any of claims 1-5 , further comprising the step of:
encoding and/or compressing (109) the layer output of the at least one processed layer when it is determined to transmit the layer output of the at least one processed layer to the cloud service of the neural network for processing the subsequent layers.

7. The method according to any of claims 1-6, further comprising the step of:
recording (104) the estimated energy usage for processing the at least one non-processed layer layer-wise in the device of the neural network in response to estimating, by the device of the neural network, the energy usage for processing the at least one non-processed layer in the device.

8. The method according to any of claims 1-7, wherein the energy usage for processing the at least one non-processed layer and subsequent layers in the device of the neural network comprises energy used for any one of multiply-accumulate operations, memory accesses, non-linear activation functions, normalization, padding, and pooling.

9. The method according to any of claims 1-8, wherein the processing of the at least non-processed layer and subsequent layers comprises inference processing.

10. The method according to any of claims 1-9, wherein the device of the neural network is a resource constrained device.

11. The method according to claim 10, wherein the resource constrained device comprises a sensor.

12. The method according to any of claims 1-11, wherein the cloud service of the neural network comprises an edge cloud service.

13. An apparatus for dynamic load distribution for a distributed neural network wherein processing by the distributed neural network comprises processing a plurality of layers, comprising:
a memory comprising executable instructions, one or more processors (400) configured to communicate with the memory wherein the one or more processors (400) are configured to cause the apparatus to:
estimate, by a device of the neural network, an energy usage for processing at least one non-processed layer in the device,
estimate, by the device of the neural network, an energy usage for transmitting layer output of at least one processed layer to a cloud service of the neural network for processing,
compare, by the device of the neural network, the estimated energy usage for processing the at least one non-processed layer in the device with the estimated energy usage for transmitting the layer output of the at least one processed layer to the cloud service,
determine to process the at least one non-processed layer in the device when the estimated energy usage for transmitting the layer output of the at least one processed layer to the cloud service is equal or greater than the estimated energy usage for processing the at least one non-processed layer, and
determine to transmit the layer output of the at least one processed layer to the cloud service for processing subsequent layers when the estimated energy usage for transmitting the layer output of the at least one processed layer to the cloud service is less than the estimated energy usage for processing the at least one non-processed layer in the device.

14. The apparatus according to claim 13, wherein the one or more processors are further configured to cause the apparatus to:
determine, by the device of the neural network, at least one layer output of the at least one processed layer for processing the subsequent layers.

15. The apparatus according to claim 14, wherein the one or more processors are further configured to cause the apparatus to:
determine, by the device of the neural network, multiple layer outputs of multiple processed layers for processing the subsequent layers.

16. The apparatus according to any of claims 14-15, wherein the one or more processors are further configured to cause the apparatus to:
receive an input , by the device of the neural network, preceding the determination of the at least one layer output of the at least one processed layer for processing the subsequent layers wherein the input comprises any one of image data, voice data, video data, and temperature data.

17. The apparatus according to any of claims 13-16, wherein the one or more processors are further configured to cause the apparatus to:
perform channel estimation to estimate the energy usage for transmitting the layer output of the at least one processed layer to the cloud service of the neural network for processing the subsequent layers.

18. The apparatus according to any of claims 13-17 , wherein the one or more processors are further configured to cause the apparatus to:
encode and/or compress the layer output of the at least one processed layer when it is determined to transmit the layer output of the at least one processed layer to the cloud service of the neural network for processing.

19. The apparatus according to any of claims 13-18, wherein the cloud service of the neural network comprises an edge cloud service.

20. A system for dynamic load distribution for a distributed neural network wherein processing by the distributed neural network comprises processing a plurality of layers, comprising:
an estimating module (403) configured to estimate, by a device of the neural network, an energy usage for processing at least one non-processed layer in the device,
an estimating module (406) configured to estimate, by the device of the neural network,
an energy usage for transmitting layer output of at least one processed layer to a cloud service of the neural network for processing,
a comparing module (407) configured to compare, by the device of the neural network, the estimated energy usage for processing the at least one non-processed layer in the device with the estimated energy usage for transmitting the layer output of the at least one processed layer to the cloud service,
a determining module (408a) configured to determine to process the at least one non-processed layer in the device when the estimated energy usage for transmitting the layer output of the at least one processed layer to the cloud service is equal or greater than the estimated energy usage for processing the at least one non-processed layer, and
a determining module (408b) configured to determine to transmit the layer output of the at least one processed layer to the cloud service for processing subsequent layers when the estimated energy usage for transmitting the layer output of the at least one processed layer to the cloud service is less than the estimated energy usage for processing the at least one non-processed layer in the device.

21. The system according to claim 20, further comprising:
a determining module (402) configured to determine, by the device of the neural network, at least one layer output of the at least one processed layer for processing the subsequent layers.

## Patentansprüche

1. Verfahren zur dynamischen Lastverteilung für ein verteiltes neuronales Netzwerk, wobei Verarbeiten durch das verteilte neuronale Netzwerk Verarbeiten einer Vielzahl von Schichten umfasst, die Schritte umfassend zum:
Schätzen (103) durch eine Vorrichtung des neuronalen Netzwerks, eines Energieverbrauchs zum Verarbeiten mindestens einer nicht verarbeiteten Schicht in der Vorrichtung,
Schätzen (106) durch die Vorrichtung des neuronalen Netzwerks, eines Energieverbrauchs zum Übertragen einer Schichtausgabe mindestens einer verarbeiteten Schicht an einen Cloud-Dienst des neuronalen Netzwerks zum Verarbeiten,
Vergleichen (107) durch die Vorrichtung des neuronalen Netzwerks, des geschätzten Energieverbrauchs zum Verarbeiten der mindestens einen nicht verarbeiteten Schicht in der Vorrichtung mit dem geschätzten Energieverbrauch zum Übertragen des Schichtausgangs der mindestens einen verarbeiteten Schicht an den Cloud-Dienst,
Bestimmen (108), die mindestens einen nicht verarbeitete Schicht in der Vorrichtung zu verarbeiten, wenn der geschätzte Energieverbrauch zum Übertragen des Schichtausgangs der mindestens einen verarbeiteten Schicht an den Cloud-Dienst gleich oder größer ist als der geschätzte Energieverbrauch zum Verarbeiten der mindestens einen nicht verarbeiteten Schicht, und
Bestimmen (110), die Schichtausgabe der mindestens einen verarbeiteten Schicht an den Cloud-Dienst zum Verarbeiten nachfolgender Schichten zu übertragen, wenn der geschätzte Energieverbrauch zum Übertragen der Schichtausgabe der mindestens einen verarbeiteten Schicht an den Cloud-Dienst geringer ist als der geschätzte Energieverbrauch zum Verarbeiten der mindestens einen nicht verarbeiteten Schicht in der Vorrichtung.

2. Verfahren nach Anspruch 1, weiter umfassend den Schritt zum:
Bestimmen (102) durch die Vorrichtung des neuronalen Netzwerks mindestens einer Schichtausgabe der mindestens einen verarbeiteten Schicht zum Verarbeiten der nachfolgenden Schichten.

3. Verfahren nach Anspruch 2, wobei das Bestimmen (102) durch die Vorrichtung des neuronalen Netzwerks weiter Bestimmen mehrerer Schichtausgaben mehrerer verarbeiteter Schichten zum Verarbeiten der nachfolgenden Schichten umfasst.

4. Verfahren nach einem der Ansprüche 2-3, wobei dem Bestimmen (102) durch die Vorrichtung des neuronalen Netzwerks der mindestens einer Schichtausgabe der mindestens einen verarbeiteten Schicht zum Verarbeiten der nachfolgenden Schichten der Schritt vorangeht zum:
Empfangen (101) einer Eingabe in der Vorrichtung des neuronalen Netzwerks, wobei die Eingabe eines von Bilddaten, Sprachdaten, Videodaten und Temperaturdaten umfasst.

5. Verfahren nach einem der Ansprüche 1-4, weiter umfassend den Schritt zum:
Durchführen (105) einer Kanalschätzung, um den Energieverbrauch zum Übertragen der Schichtausgabe der mindestens einen verarbeiteten Schicht an den Cloud-Dienst des neuronalen Netzwerks zum Verarbeiten der nachfolgenden Schicht zu schätzen.

6. Verfahren nach einem der Ansprüche 1-5, weiter umfassend den Schritt zum:
Codieren und/oder Komprimieren (109) der Schichtausgabe der mindestens einen verarbeiteten Schicht, wenn bestimmt wird, die Schichtausgabe der mindestens einen verarbeiteten Schicht an den Cloud-Dienst des neuronalen Netzwerks zum Verarbeiten der nachfolgenden Schichten zu übertragen.

7. Verfahren nach einem der Ansprüche 1-6, weiter umfassend den Schritt zum:
Aufzeichnen (104) des geschätzten Energieverbrauchs zum Verarbeiten der mindestens einen nicht verarbeiteten Schicht schichtweise in der Vorrichtung des neuronalen Netzwerks als Reaktion auf Schätzen durch die Vorrichtung des neuronalen Netzwerks des Energieverbrauchs zum Verarbeiten der mindestens einen nicht verarbeiteten Schicht in der Vorrichtung.

8. Verfahren nach einem der Ansprüche 1-7, wobei der Energieverbrauch zum Verarbeiten der mindestens einen nicht verarbeiteten Schicht und nachfolgender Schichten in der Vorrichtung des neuronalen Netzwerks Energie umfasst, die für eine von Multiplikations-Akkumulations-Operationen, Speicherzugriffe, nichtlineare Aktivierungsfunktionen, Normalisierung, Padding und Pooling verbraucht wird.

9. Verfahren nach einem der Ansprüche 1-8, wobei das Verarbeiten der mindestens unverarbeiteten Schicht und nachfolgender Schichten eine Inferenzverarbeitung umfasst.

10. Verfahren nach einem der Ansprüche 1-9, wobei die Vorrichtung des neuronalen Netzwerks eine ressourcenbeschränkte Vorrichtung ist.

11. Verfahren nach Anspruch 10, wobei die ressourcenbeschränkte Vorrichtung einen Sensor umfasst.

12. Verfahren nach einem der Ansprüche 1-11, wobei der Cloud-Dienst des neuronalen Netzwerks einen Edge-Cloud-Dienst umfasst.

13. Einrichtung zur dynamischen Lastverteilung für ein verteiltes neuronales Netzwerk, wobei Verarbeiten durch das verteilte neuronale Netzwerk Verarbeiten einer Vielzahl von Schichten umfasst, umfassend:
ein Speicher, umfassend ausführbare Anweisungen, einen oder mehrere Prozessoren (400), die konfiguriert sind, um mit dem Speicher zu kommunizieren, wobei der eine oder mehrere Prozessoren (400) konfiguriert sind, um die Einrichtung zu veranlassen:
durch eine Vorrichtung des neuronalen Netzwerks, einen Energieverbrauch zum Verarbeiten mindestens einer nicht verarbeiteten Schicht in der Vorrichtung zu schätzen,
durch die Vorrichtung des neuronalen Netzwerks, einen Energieverbrauch zum Übertragen einer Schichtausgabe mindestens einer verarbeiteten Schicht an einen Cloud-Dienst des neuronalen Netzwerks zum Verarbeiten zu schätzen,
durch die Vorrichtung des neuronalen Netzwerks den geschätzten Energieverbrauch zum Verarbeiten der mindestens einen nicht verarbeiteten Schicht mit dem geschätzten Energieverbrauch zum Übertragen der Schichtausgabe der mindestens einen verarbeiteten Schicht an den Cloud-Dienst zu vergleichen, zu bestimmen, die mindestens eine nicht verarbeitete Schicht in der Vorrichtung zu verarbeiten, wenn der geschätzte Energieverbrauch zum Übertragen der Schichtausgabe der mindestens einen verarbeiteten Schicht an den Cloud-Dienst gleich oder größer ist als der geschätzte Energieverbrauch zum Verarbeiten der mindestens einen nicht verarbeiteten Schicht, und
zu bestimmen, die Schichtausgabe der mindestens einen verarbeiteten Schicht an den Cloud-Dienst zum Verarbeiten nachfolgender Schichten zu übertragen, wenn der geschätzte Energieverbrauch zum Übertragen der Schichtausgabe der mindestens einen verarbeiteten Schicht an den Cloud-Dienst geringer ist als der geschätzte Energieverbrauch zum Verarbeiten der mindestens einen nicht verarbeiteten Schicht in der Vorrichtung.

14. Einrichtung nach Anspruch 13, wobei der eine oder mehrere Prozessoren weiter konfiguriert sind, um die Einrichtung zu veranlassen:
durch die Vorrichtung des neuronalen Netzwerks mindestens eine Schichtausgabe der mindestens einen verarbeiteten Schicht zum Verarbeiten der nachfolgenden Schichten zu bestimmen.

15. Einrichtung nach Anspruch 14, wobei der eine oder mehrere Prozessoren weiter konfiguriert sind, um die Einrichtung zu veranlassen:
durch die Vorrichtung des neuronalen Netzwerks mehrere Schichtausgaben mehrerer verarbeiteter Schichten zum Verarbeiten der nachfolgenden Schichten zu bestimmen.

16. Einrichtung nach einem der Ansprüche 14-15, wobei der eine oder mehrere Prozessoren weiter konfiguriert sind, um die Einrichtung zu veranlassen:
eine Eingabe durch die Vorrichtung des neuronalen Netzwerks zu empfangen, die dem Bestimmen der mindestens einen Schichtausgabe der mindestens einen verarbeiteten Schicht zum Verarbeiten der nachfolgenden Schichten vorangeht, wobei die Eingabe eines von Bilddaten, Sprachdaten, Videodaten oder Temperaturdaten umfasst.

17. Einrichtung nach einem der Ansprüch 13-16, wobei der eine oder mehrere Prozessoren weiter konfiguriert sind, um die Einrichtung zu veranlassen:
Kanalschätzung durchzuführen, um den Energieverbrauch zum Übertragen der Schichtausgabe der mindestens einen verarbeiteten Schicht an den Cloud-Dienst des neuronalen Netzwerks zum Verarbeiten der nachfolgenden Schicht zu schätzen.

18. Einrichtung nach einem der Ansprüche 13-17, wobei der eine oder mehrere Prozessoren weiter konfiguriert sind, um die Einrichtung zu veranlassen:
die Schichtausgabe der mindestens einen verarbeiteten Schicht zu codieren und/oder komprimieren, wenn bestimmt wird, die Schichtausgabe der mindestens einen verarbeiteten Schicht an den Cloud-Dienst des neuronalen Netzwerks zum Verarbeiten der nachfolgenden Schichten zu übertragen.

19. Einrichtung nach einem der Ansprüche 13-18, wobei der Cloud-Dienst des neuronalen Netzwerks einen Edge-Cloud-Dienst umfasst.

20. System zur dynamischen Lastverteilung für ein verteiltes neuronales Netzwerk, wobei Verarbeiten durch das verteilte neuronale Netzwerk Verarbeiten einer Vielzahl von Schichten umfasst, umfassend:
ein Schätzmodul (403), das konfiguriert ist, um durch eine Vorrichtung des neuronalen Netzwerks, einen Energieverbrauch zum Verarbeiten mindestens einer nicht verarbeiteten Schicht in der Vorrichtung zu schätzen,
ein Schätzmodul (406), das konfiguriert ist, um durch die Vorrichtung des neuronalen Netzwerks, einen Energieverbrauch zum Übertragen einer Schichtausgabe mindestens einer verarbeiteten Schicht an einen Cloud-Dienst des neuronalen Netzwerks zum Verarbeiten zu schätzen,
ein Vergleichsmodul (407), das konfiguriert ist, um durch die Vorrichtung des neuronalen Netzwerks, den geschätzten Energieverbrauch zum Verarbeiten der mindestens einen nicht verarbeiteten Schicht in der Vorrichtung mit dem geschätzten Energieverbrauch zum Übertragen des Schichtausgangs der mindestens einen verarbeiteten Schicht an den Cloud-Dienst zu vergleichen,
ein Bestimmungsmodul (408a), das konfiguriert ist, um zu bestimmen, die mindestens einen nicht verarbeitete Schicht in der Vorrichtung zu verarbeiten, wenn der geschätzte Energieverbrauch zum Übertragen des Schichtausgangs der mindestens einen verarbeiteten Schicht an den Cloud-Dienst gleich oder größer ist als der geschätzte Energieverbrauch zum Verarbeiten der mindestens einen nicht verarbeiteten Schicht, und
ein Bestimmungsmodul (408b), das konfiguriert ist, um zu bestimmen, die Schichtausgabe der mindestens einen verarbeiteten Schicht an den Cloud-Dienst zum Verarbeiten nachfolgender Schichten zu übertragen, wenn der geschätzte Energieverbrauch zum Übertragen der Schichtausgabe der mindestens einen verarbeiteten Schicht an den Cloud-Dienst geringer ist als der geschätzte Energieverbrauch zum Verarbeiten der mindestens einen nicht verarbeiteten Schicht in der Vorrichtung.

21. System nach Anspruch 20, weiter umfassend:
ein Bestimmungsmodul (402), das konfiguriert ist, um durch die Vorrichtung des neuronalen Netzwerks mindestens eine Schichtausgabe der mindestens einen verarbeiteten Schicht zum Verarbeiten der nachfolgenden Schichten zu bestimmen.

## Revendications

1. Procédé de répartition dynamique de la charge pour un réseau neuronal distribué, dans lequel le traitement par le réseau neuronal distribué comprend le traitement d'une pluralité de couches, comprenant les étapes de :
estimation(103), par un dispositif du réseau neuronal, d'une consommation d'énergie pour le traitement d'au moins une couche non traitée dans le dispositif,
estimation (106), par le dispositif du réseau neuronal, d'une consommation d'énergie pour transmettre la sortie de couche d'au moins une couche traitée à un service cloud du réseau neuronal pour traitement,
comparaison (107), par le dispositif du réseau neuronal, de la consommation d'énergie estimée pour le traitement de la au moins une couche non traitée dans le dispositif avec la consommation d'énergie estimée pour la transmission de la sortie de couche de la au moins une couche traitée au service cloud,
détermination (108) du fait qu'il faut traiter la au moins une couche non traitée dans le dispositif lorsque la consommation d'énergie estimée pour la transmission de la sortie de couche de la au moins une couche traitée au service cloud est égale ou supérieure à la consommation d'énergie estimée pour le traitement d'au moins une couche non traitée, et
détermination (110) du fait qu'il faut transmettre la sortie de couche de la au moins une couche traitée au service cloud pour le traitement des couches suivantes lorsque la consommation d'énergie estimée pour transmettre la sortie de couche de la au moins une couche traitée au service cloud est inférieure à la consommation d'énergie estimée pour traiter la au moins une couche non traitée dans le dispositif.

2. Procédé selon la revendication 1, comprenant en outre l'étape de :
détermination (102), par le dispositif du réseau neuronal, d'au moins une sortie de couche de la au moins une couche traitée pour traiter les couches suivantes.

3. Procédé selon la revendication 2, dans lequel la détermination (102), par le dispositif du réseau neuronal, comprend en outre la détermination de plusieurs sorties de couches multiples de couches traitées pour le traitement des couches suivantes.

4. Procédé selon l'une quelconque des revendications 2-3, dans lequel la détermination (102), par le dispositif du réseau neuronal, de la sortie d'au moins une couche de la au moins une couche traitée pour le traitement des couches suivantes est précédée de l'étape de :
réception (101) d'une entrée, dans le dispositif du réseau neuronal, dans lequel l'entrée comprend l'une quelconque des données d'image, des données vocales, des données vidéo et des données de température.

5. Procédé selon l'une quelconque des revendications 1-4, comprenant en outre l'étape de :
exécution d'une estimation de canal (105) pour estimer la consommation d'énergie nécessaire à la transmission de la sortie de couche de la au moins une couche traitée au service cloud du réseau neuronal pour le traitement des couches suivantes.

6. Procédé selon l'une quelconque des revendications 1-5, comprenant en outre l'étape de :
codage et/ou compression (109) de la sortie de la couche de la au moins une couche traitée lorsqu'il est déterminé de transmettre la sortie de la couche de la au moins une couche traitée au service cloud du réseau neuronal pour le traitement des couches suivantes.

7. Procédé selon l'une quelconque des revendications 1-6, comprenant en outre l'étape de :
enregistrement (104) de la consommation d'énergie estimée pour le traitement de la au moins une couche non traitée couche par couche dans le dispositif du réseau neuronal en réponse à l'estimation, par le dispositif du réseau neuronal, de la consommation d'énergie pour le traitement de la au moins une couche non traitée dans le dispositif.

8. Procédé selon l'une quelconque des revendications 1-7, dans lequel la consommation d'énergie pour le traitement de la au moins une couche non traitée et des couches suivantes dans le dispositif du réseau neuronal comprend l'énergie utilisée pour l'une quelconque des opérations de multiplication-accumulation, des accès à la mémoire, des fonctions d'activation non linéaires, de la normalisation, du remplissage et du regroupement.

9. Procédé selon l'une quelconque des revendications 1-8, dans lequel le traitement de la au moins une couche non traitée et des couches suivantes comprend un traitement d'inférence.

10. Procédé selon l'une quelconque des revendications 1-9, dans lequel le dispositif du réseau neuronal est un dispositif à ressources limitées.

11. Procédé selon la revendication 10, dans lequel le dispositif à ressources limitées comprend un capteur.

12. Procédé selon l'une quelconque des revendications 1-11, dans lequel le service cloud du réseau neuronal comprend un service cloud de périphérie.

13. Appareil de répartition dynamique de charge pour un réseau neuronal distribué, dans lequel le traitement par le réseau neuronal distribué comprend le traitement d'une pluralité de couches, comprenant :
une mémoire comprenant des instructions exécutables, un ou plusieurs processeurs (400) configurés pour communiquer avec la mémoire, dans lequel ledit un ou les plusieurs processeurs (400) sont configurés pour amener l'appareil à :
estimer, par un dispositif du réseau neuronal, la consommation d'énergie nécessaire au traitement d'au moins une couche non traitée dans le dispositif,
estimer, par le dispositif du réseau neuronal, la consommation d'énergie nécessaire à la transmission de la sortie de couche d'au moins une couche traitée vers un service cloud du réseau neuronal pour traitement,
comparer, au moyen du dispositif du réseau neuronal, la consommation d'énergie estimée pour le traitement de la au moins une couche non traitée dans le dispositif avec la consommation d'énergie estimée pour la transmission de la sortie de couche de la au moins une couche traitée vers le service cloud ; décider de traiter la au moins une couche non traitée dans le dispositif lorsque la consommation d'énergie estimée pour la transmission de la sortie de couche de la au moins une couche traitée vers le service cloud est égale ou supérieure à la consommation d'énergie estimée pour le traitement de la au moins une couche non traitée.
décider de transmettre la sortie de couche de la au moins une couche traitée au service cloud pour le traitement des couches suivantes lorsque la consommation d'énergie estimée pour la transmission de la sortie de couche de la au moins une couche traitée au service cloud est inférieure à la consommation d'énergie estimée pour le traitement de la au moins une couche non traitée dans le dispositif.

14. Appareil selon la revendication 13, dans lequel ledit un ou les plusieurs processeurs sont en outre configurés pour que l'appareil :
détermine, par le dispositif du réseau neuronal, au moins une sortie de couche de la au moins une couche traitée pour traiter les couches suivantes.

15. Appareil selon la revendication 14, dans lequel ledit un ou les plusieurs processeurs sont en outre configurés pour que l'appareil :
détermine, par le dispositif du réseau neuronal, les sorties de multiples sorties de couche de multiples couches traitées pour le traitement des couches suivantes.

16. Appareil selon l'une quelconque des revendications 14 et 15, dans lequel le ou les processeurs sont en outre configurés pour que l'appareil :
reçoive une entrée, par le dispositif du réseau neuronal, précédant la détermination de la sortie de couche de la au moins une couche traitée pour le traitement des couches suivantes, dans lequel l'entrée comprend des données d'image, des données vocales, des données vidéo et des données de température.

17. Appareil selon l'une quelconque des revendications 13-16, dans lequel ledit un ou les plusieurs processeurs sont en outre configurés pour que l'appareil :
effectue une estimation de canal pour estimer la consommation d'énergie nécessaire à la transmission de la sortie de couche de la au moins une couche traitée vers le service cloud du réseau neuronal pour le traitement des couches suivantes.

18. Appareil selon l'une quelconque des revendications 13-17, dans ledit un ou les plusieurs processeurs sont en outre configurés pour que l'appareil :
encode et/ou compresse la sortie de couche de la au moins une couche traitée lorsqu'il est décidé de transmettre la sortie de couche de la au moins une couche traitée au service cloud du réseau neuronal pour traitement.

19. Appareil selon l'une quelconque des revendications 13-18, dans lequel le service cloud du réseau neuronal comprend un service cloud de périphérie.

20. Système de répartition dynamique de la charge pour un réseau neuronal distribué, dans lequel le traitement par le réseau neuronal distribué comprend le traitement d'une pluralité de couches, comprenant :
un module d'estimation (403) configuré pour estimer, par un dispositif du réseau neuronal, une consommation d'énergie pour le traitement d'au moins une couche non traitée dans le dispositif,
un module d'estimation (406) configuré pour estimer, par le dispositif du réseau neuronal, une consommation d'énergie pour transmettre la sortie de couche d'au moins une couche traitée à un service cloud du réseau neuronal pour traitement,
un module de comparaison (407) configuré pour comparer, par le dispositif du réseau neuronal, la consommation d'énergie estimée pour le traitement d'au moins une couche non traitée dans le dispositif avec la consommation d'énergie estimée pour la transmission de la sortie de la couche d'au moins une couche traitée au service cloud,
un module de détermination (408a) configuré pour déterminer de traiter la au moins une couche non traitée dans le dispositif lorsque la consommation d'énergie estimée pour la transmission de sortie de la au moins une couche traitée vers le service cloud est égale ou supérieure à la consommation d'énergie estimée pour le traitement de la au moins une couche non traitée, et
un module de détermination (408b) configuré pour déterminer de transmettre la sortie de couche de la au moins une couche traitée au service cloud pour le traitement des couches suivantes lorsque la consommation d'énergie estimée pour transmettre la sortie de couche de la au moins une couche traitée au service cloud est inférieure à la consommation d'énergie estimée pour traiter la au moins une couche non traitée dans le dispositif.

21. Système selon la revendication 20, comprenant en outre :
un module de détermination (402) configuré pour déterminer, par le dispositif du réseau neuronal, au moins une sortie de couche de la au moins une couche traitée pour le traitement des couches suivantes.
